# EUROPEAN PATENT SPECIFICATION

(11) **EP 0 853 824 B1**
(45) Date of publication and mention of the grant of the patent: **23.07.2003**
(21) Application number: 96936178.1
(22) Date of filing: 04.10.1996
(51) Int. Cl.: H01M 8/02, H01M 8/10

(54) **FLOW FIELD STRUCTURES FOR MEMBRANE ELECTRODE ASSEMBLIES OF FUEL CELLS**
FLUESSIGKEITSVERTEILUNGSSTRUKTUREN FUER MEMBRAN-ELEKTRODE-ANORDNUNGEN VON BRENNSTOFFZELLEN
STRUCTURES DE CHAMPS D'ECOULEMENT POUR ASSEMBLAGES D'ELECTRODES A MEMBRANE DE PILES A COMBUSTIBLES

(30) Priority: 06.10.1995 US 540105; 06.11.1995 US 554066; 08.03.1996 US 13050 P
(43) Date of publication of application: 22.07.1998
(60) Divisional application: 02020838.5
(73) Proprietor: Dow Global Technologies Inc., Midland, Michigan 48674 (US)
(72) Inventor: MUSSELL, Robert, D., Midland, MI 48640 (US); BABINEC, Susan, J., Midland, MI 48640 (US); SCORTICHINI, Carey, L., Midland, MI 48642 (US); PLOWMAN, Keith, R., Lake Jackson, TX 77566 (US); WEBB, Steven, P., Midland, MI 48640 (US); REHG, Timothy J., Huntington Beach, CA 92648 (US)
(74) Representative: Raynor, John
(86) International application number: US9615893
(87) International publication number: WO97013287

(56) References cited:
- EP-A- 0 064 389
- EP-A- 0 560 295
- EP-A- 0 577 291
- EP-A- 0 629 015
- EP-A- 0 687 023
- EP-A- 0 718 903
- WO-A-94/05049
- WO-A-94/25993
- WO-A-96/12316
- US-A- 4 215 183
- US-A- 4 469 579
- US-A- 5 171 644
- US-A- 5 514 486
- US-A- 5 521 020
- US-A- 5 620 807
- CHEMICAL ABSTRACTS, vol. 105, no. 2, July 1986 Columbus, Ohio, US; abstract no. 14273q, FUJITA ET AL: "Electrochemical apparatus using cation-exchange membrane as electrolyte" XP002025241 & JP 61 052 383 A (JAPAN STORAGE BATTERY CO) 15 March 1986 & PATENT ABSTRACTS OF JAPAN vol. 10, no. 214 (C-362), 25 July 1986 JP
- WILSON M S ET AL: "ALTERNATIVE FLOW-FIELD AND BACKING CONCEPTS FOR POLYMER ELECTROLYTE MEMBRANE FUEL CELLS" EXTENDED ABSTRACTS FALL MEETING 1995 OCTOBER 8/13 ST. LOUIS, MISSOURI, vol. 95/2, page 1043/1044 XP000553942
- MAKOTO UCHIDA ET AL: "New Preparation Method for Polymer-Electrolyte Fuel Cells" JOURNAL OF THE ELECTROCHEMICAL SOCIETY., vol. 142, no. 2, February 1995, MANCHESTER, NEW HAMPSHIRE US, pages 463-468, XP002044312
- PATENT ABSTRACTS OF JAPAN vol. 095, no. 003, 28 April 1995 & JP 06 333574 A (ASAHI CHEM IND CO LTD), 2 December 1994, & DATABASE WPI Derwent Publications Ltd., London, GB; AN 95-055299
- MURPHY O J ET AL: "HIGH POWER DENSITY PROTON-EXCHANGE MEMBRANE FUEL CELLS" JOURNAL OF POWER SOURCES, vol. 47, no. 3, 15 January 1994, pages 353-368, XP000533208
- SPRINGER T E ET AL: "MODELING AND EXPERIMENTAL DIAGNOSTICS IN POLYMER ELECTROLYTE FUEL CELLS" JOURNAL OF THE ELECTROCHEMICAL SOCIETY, vol. 140, no. 12, 1 December 1993, pages 3513-3526, XP000430007

## Description

This invention relates to electrochemical fuel cells and, more particularly, to fuel cell membrane electrode assemblies and the flow field structures adjacent thereto.

Electrochemical fuel cells generate electrical current through the oxidation of a fuel. One type of fuel cell employs a membrane electrode assembly ("MEA") including a membrane having an anode side and cathode side, depending on the direction of the current with respect thereto. The membrane itself serves as an electrolyte. A suitable catalyst for the electrochemical reaction is applied to the membrane, or is incorporated into the polymeric composition from which the membrane is prepared. Alternatively, the catalyst is applied to carbon fiber paper, which is then laminated to the membrane to form the membrane electrode assembly.

Located on both sides of the MEA is a flow field which typically consists of a graphite plate which has been machined to provide a series of channels on its surface, as shown, for example, in U.S. Patents 5,300,370 and 5,230,966. The channels transport fuel to the anode side and oxidant to the cathode side, and transport reaction products primarily from the cathode side, and are typically separated from the membrane electrode assembly by a thin layer of a porous carbon material, such as carbon fiber paper.

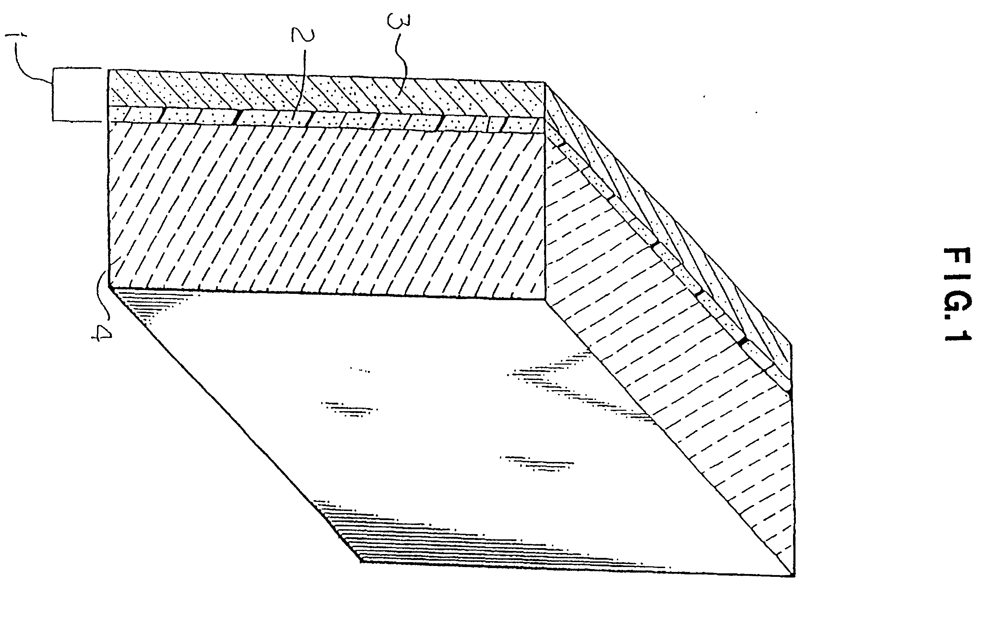

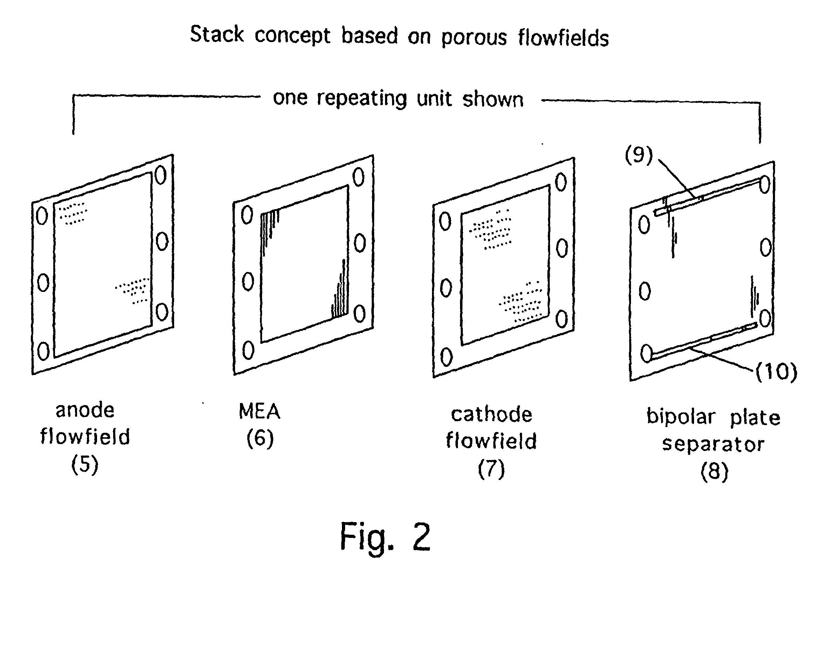

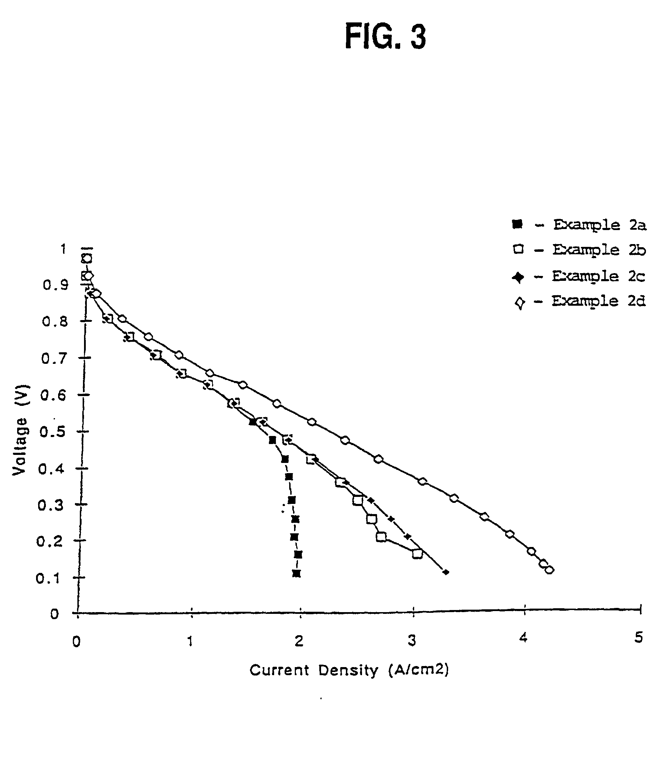

Figure 1 illustrates one embodiment of the membrane electrode assembly and the flow field of the fuel cell of the first aspect of the invention. Figure 2 illustrates one configuration of a repeat unit which may be utilized in the preparation of a fuel cell stack containing a plurality of fuel cells arranged in series, which incorporates the membrane electrode assembly and flow field illustrated in Figure 1. Figures 3,4, and 5 illustrate the performance of the fuel cells referred to in Examples 1, 2, and 3.

The invention provides an electrochemical fuel cell having a membrane electrode assembly and a flow field adjacent thereto wherein the flow field is formed of an electrically conductive porous carbon material having a porosity of at least 50 percent and a mean pore size of at least 35 micrometres wherein the porous material has a thickness of at least 20 mils (0.5mm) and is such that a 3 inch by 3 inch (7.5cm x 7.5cm) portion of the porous material can imbibe at least 0.5 gram of water per gram of material in ten seconds when held vertically in 3/16 inch (0.5cm) of water.

It has been discovered that the fuel cell of the invention is able to operate at relatively high current densities and relatively high voltages at lower gas flow rates.

Typically, in a fuel cell, the membrane and the layer of polymer containing metal catalytically-active particles ("active layer") must be hydrated in order to be sufficiently ionically conductive. During operation of the fuel cell, water is formed on the cathode side of the active layer, which condenses within the adjacent flow field. Water may also be present due to the humidification of one or both of the reactant gases. However, if too much water condenses or otherwise accumulates adjacent to the active layer or within the active layer, the efficiency of the fuel cell is reduced, since diffusion of gas through liquid water is slow relative to its diffusion through water vapor.

The porosity and pore size characteristics of the flow field in the fuel cell of the invention are believed to improve the mass transfer capabilities, which results in higher voltages at high current densities.

It is believed, without intending to be bound by any particular theory, that the relatively high porosity and large pores combine to preserve effective gas transport in the presence of liquid water. Because the feed gas flow is in the plane of the flow field and substantially parallel to the active layer, the liquid is swept away from the active layer and out of the flow field by the gas stream, thus keeping pores open for effective transport of reactant gas to the catalytically-active particles. However, when the flow field is relatively thick, (greater than 20 mils for air feed stoichiometry equal to 2 at 30 psig) the gas velocity becomes inadequate to keep the pores clear of water. In such cases, increasing the wettability of the flow field is believed to promote a type of flow condition therein which may be referred to as annular flow, wherein the liquid spreads out onto the solid surfaces of the porous structure, leaving the centers of the large pores open and available for effective gas transport.

The fuel cell includes a membrane electrode assembly having a solid polymer electrolyte, and at least two active layers positioned on the same side of the membrane; wherein the active layers comprise catalytically-active particles and an ionomer; the average equivalent weights of the ionomers in the layers differ by at least 50; and the active layer positioned closest to the membrane (hereafter, the "first" active layer) contains the ionomer with the lower average equivalent weight. The "second" active layer (the layer positioned on the side of the first active layer which is opposite to the side facing the membrane) may either be positioned adjacent to and in contact with the first active layer, or one or more additional active layers may be positioned between the first and second active layers.

The cell further preferably has a membrane electrode assembly having a solid polymer electrolyte, and at least one active layer positioned on one side of the membrane; wherein the active layer comprises (a) catalytically-active particles, and (b) an ionomer having an equivalent weight in the range of from 650 to 950 and which is substantially insoluble in water at temperatures of less than 100°C.

It has been discovered that the membrane electrode assemblies ("MEAs") specified above when utilized in a fuel cell, provide a relatively high voltage at a given current density and gas flow rate.

The equivalent weight of the ionomer is believed to affect the water content of the active layer. It is believed, without intending to be bound by any particular theory, that the lower equivalent weight ionomer maintains a higher water content at low current densities. This higher water content improves the proton conductivity and the accessibility of the catalytically active particles, thereby increasing the voltage. However, this increase in water content can lower the performance (voltage) at higher current densities. It has been discovered that the performance at both high and low current densities may be optimized by using a multi-layer active layer with a different equivalent weight ionomer in each layer. It is believed, without intending to be bound by any particular theory, that the improved performance results from the differences in hydrophilicity between the layers. The lower equivalent weight ionomer adjacent to the membrane is believed to provide an area within the MEA having a high water content, for better performance at low current densities, while the less hydrophilic higher equivalent weight ionomer helps transport water away from the membrane at higher current densities. The use of a relatively low equivalent weight ionomer gives better performance at lower current densities.

The electrochemical fuel cell according to the invention preferably has a membrane electrode assembly and a layer of an electrically conductive porous material adjacent thereto which has at least two portions with different mean pore sizes, wherein a first portion of the layer adjacent to the membrane electrode assembly has a porosity no greater than a second portion of the layer adjacent to the opposite side of the layer; the second portion has a porosity of at least 82 percent; and the second portion has an mean pore size which is at least 10 microns and at least ten times greater than the mean pore size of the first portion.

Further, the electrochemical fuel cell preferably has a membrane electrode assembly with a nonwoven porous layer of an electrically conductive porous material adjacent thereto which has at least two portions with different mean pore sizes, wherein a first portion of the layer adjacent to the membrane electrode assembly has a porosity no greater than a second portion of the layer adjacent to the opposite side of the layer; the second portion has a porosity of at least 50 percent; and the second portion has a mean pore size which is at least 35 microns and at least ten times greater than the mean pore size of the first portion.

The electrochemical fuel cell may be prefered has : (a) applying a layer of a conductive composition to a sheet of a porous conductive material having a porosity of at least 82 percent under conditions sufficient to form a porous, solid layer of the conductive composition on one side of the sheet of porous conductive material, forming a composite thereby, and (b) placing the composite adjacent to the membrane electrode assembly so that the side of the composite to which the conductive composition was applied is facing said assembly.

It has been discovered that the fuel cells according to the above preferred aspects of the invention are able to operate at a high current density at a relatively high voltage, have a relatively high power density, and provide a high power density even when operated under relatively low gas pressures.

The membrane/electrode assembly, may be prepared by the sequential steps of (i) applying a layer of the composition of the first aspect of the invention to a solid polymer electrolyte, a carbon fiber paper, or a release substrate; (ii) heating the composition under conditions sufficient to volatilize at least 95 percent of component (b); and (iii) positioning the composition in contact with the solid polymer electrolyte, if the composition was not applied directly to the solid polymer electrolyte, forming the membrane/electrode assembly thereby.

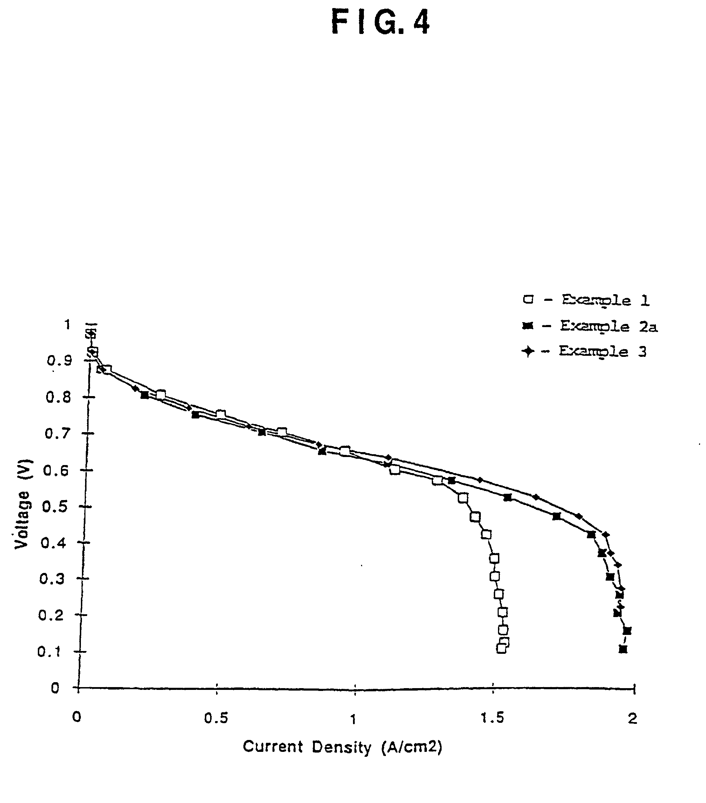

Referring now to Figure 1, the term "membrane electrode assembly" (1) as used herein refers to the combination of the solid polymer electrolyte (also referred to herein as a "membrane") and catalytically-active particles in the fuel cell assembly, regardless of its configuration or method of preparation. The layer of membrane material containing such particles are referred to as the "active layer", regardless of whether such particles are incorporated into a discrete layer of polymer (2) and applied or laminated to the surface of the membrane (3), or incorporated into the membrane itself. Referring now to Figure 1, the flow field (4) is a layer of an electrically conductive porous material having a gas stream inlet and outlet connected thereto. The flow field may comprise porous carbon material. The fuel cell of the first aspect of the invention preferably contains no impermeable flow field components having engraved, milled, or molded flow channels configured across its entire active face. These channels deliver gases directly to the active layerthrough a porous carbon "backing layer" which supports the active layer, as illustrated in Figures 1 and 4 of U.S. Patent 5,108,849. However, the flow field, bipolar plates, and/or end plates used as supports for the fuel cell and to separate cells in a multi-cell configuration may contain one or more ducts therein to increase the flow of reactant gases to the flow field in the fuel cell of the first aspect of the invention. An example of such ducts is illustrated in Figure 2.

Examples of suitable porous carbon materials which may be utilized as the flow field include carbon paper, graphite paper, carbon felts, or other carbon-based composites which comprise at least 20 percent by weight of carbon. The flow field may have interdigitated channels cut into it to lower the pressure drop introduced into the reactant gases. When desirable, the porous carbon material may be treated with a perfluorosilane or fluorine composition to increase its hydrophobicity, or oxidized, sulfonated, or coated with a hydrophilic material to increase its hydrophilicity. The flow field has a thickness of at least 20 mils, and a relatively high wettability. The wettability of the flow field may be determined experimentally by the following method: a 3 inch by 3 inch sample of the flow field is held vertically in a pan containing water of 3/16 inch depth. The amount of water imbibed in 10 seconds is measured by weighing. The flow fields material imbibes at least 0.5 g of water per gram of porous material, more preferably at least 1 g of water per gram of porous material.

The conductivity of the flow field layer in the first aspect of the invention is preferably at least 0.01 Siemens/cm (S/cm), more preferably at least 0.1 S/cm, and most preferably at least 0.2 S/cm. The preferred thickness of the flow field will depend on the optimal pressure drop across the flow field, but is preferably at least 1 mil, more preferably at least 5 mils, and is most preferably at least 10 mils; but is preferably no greater than 250 mils, more preferably no greater than 100 mils, and is most preferably no greater than 50 mils. The porosity of the flow field is preferably at least 75 percent, more preferably at least 80 percent. The mean pore size of the flow field is preferably at least 45 microns, more preferably at least 50 microns; but is preferably no greater than 250 microns. The term "mean pore size" as used herein means that half the open volume of the material is contained in pores larger in diameter than the mean pore size, and half is contained in pores equal to or smaller than the mean pore size. The mean pore size may be measured by any convenient method, such as by mercury porosimetry. The device used to measure the mean pore size distribution of the layer may be calibrated using silica/alumina calibration standards (available from Micromeritics, Norcross, GA).

All of the MEAs described herein may be prepared by any suitable technique unless otherwise noted. In one technique, a layer of a catalyst "ink" is first applied to a solid polymer electrolyte, a carbon fiber paper, or a release substrate. Catalyst inks typically comprise catalytically-active particles (such as platinum supported on carbon), binder, solvent or dispersing aid and, optionally, a plasticizing agent. Preferably, the ink comprises catalytically-active particles, and at least one compound which functions as an ionomer, such as a polytetrafluoroethylene polymer having sulfonic acid groups and an equivalent weight (based on the acid groups) in the range of from 650 to 1400. The ink also preferably contains an organic solvent or dispersing aid which permits the application of a thin, uniform layer of the catalyst/ionomer mixture to the solid polymer electrolyte, carbon fiber paper, or release substrate.

To prepare the MEA, a layer of catalyst "ink" is first applied to a solid polymer electrolyte, and then a layer of a second and third ink is applied to the portion of the MEA located opposite the first active layer or to a release substrate, or on top of the first active layer. The term "active layer" as used herein refers to a layer comprising a mixture of ionomer and catalytically-active particles.

The MEA may be prepared by any suitable method, but is preferably prepared by applying the catalyst ink (a suspension or dispersion of the catalytically-active particles) directly to a solid polymer electrolyte as described, for example, in U.S. Patent 5,211,984. The ink is applied to the membrane in one or more applications sufficient to give a desired loading of catalytically-active particles. Preferably, the layer of catalytically-active particles is prepared by applying at least two inks in separate steps to form layers of the different inks, with the highest equivalent weight binder ink applied in such a manner so that it will be positioned adjacent to the flow field in the fuel cell. In such cases, the membrane electrode assembly comprises a solid polymer membrane having at least two layers of catalyst ink on at least one side thereof, wherein at least two layers of the catalyst ink comprise polytetrafluoroethylene polymers having pendant sutfonic acid groups, the equivalent weights of which differ by more than 50, and wherein the layer having the highest equivalent weight is positioned adjacent to the flow field. Once prepared, the MEA is positioned next to the flow field in the fuel cell assembly.

The fuel cells described herein may be incorporated in a multi-cell assembly or "stack" comprising a number of fuel cells arranged in series. An example of a repeat unit is illustrated in Figure 2, which shows an anode flow field (5), an MEA (6), a cathode flow field (7), and a bipolar separator plate (8). The bipolar separator plate has ducts (9) and (10) which transport the reactants and reaction products to and from the flow field. In this configuration, the MEA is located between two porous flow fields that have an inert material impregnated into the border regions (the darker areas in the figure) in order to prevent the reactant gases from escaping to the outside. The holes in the border regions of all of the elements together form a gas manifold when they are stacked together and placed under compression. The material used to prepare the bipolar plate separator may be selected from a variety of rigid or nonrigid materials, and the plate has gas delivery ducts molded or embossed into its surface. These ducts deliver reactant gases to, and remove reaction products from, the porous flow fields. In an alternative embodiment, gases and products may be introduced or removed via ducts or open spaces in the porous flow field connected to manifolds. The bipolar separator plate may also have an internal structure for circulating a cooling fluid therein.

If the ink from which the second active layer is prepared, is applied on top of the first active layer, the first active layer is preferably first dried sufficiently before application of the second ink to prevent too much mixing of the inks. However, a minor degree of mixing of the inks at their point of contact with each other may be desirable since it will promote electrical and ionic conductivity between the active layers. After the inks have been applied, they are preferably heated under conditions sufficient to volatilize at least 95 percent of any organic solvent or dispersing aid present in the inks.

The term "solid polymer electrolyte" as used herein refers to a porous layer comprised of a solid polymer which has a conductivity of at least 1 x 10⁻³ Siemens/cm (S/cm) under the operating conditions of the fuel cell or electrolytic cell, or which may be reacted with acid or base to generate a porous layer having such conductivity. Preferably, the solid polymer electrolyte comprises a film of a sulfonated fluoropolymer, or a layered composite of films of sulfonated fluoropolymers having different equivalent weights.

After application of a catalyst ink to a solid polymer electrolyte, the ink is preferably heated under conditions sufficient to remove enough of the organic solvent or dispersing aid so that the active layer comprises at least 99 percent by weight, more preferably at least 99.9 percent by weight of the mixture of catalytically-active particles and the ionomer. The ink is applied in an amount sufficient to provide a layer of the mixture which has a thickness of at least 1 µm, more preferably at least 5 µm, and most preferably at least 10 µm; but is preferably no greater than 30 µm. The porosity of the layer is preferably at least 30 percent, more preferably at least 50 percent; but is preferably no greater than 90 percent, more preferably no greater than 60 percent. The mean pore size of the layer is preferably at least 0.01 µm, more preferably at least 0.03 µm; but is preferably no greater than 10 µm, more preferably no greater than 0.5 µm, and is most preferably 0.1 µm. The thickness, porosity, and pore size characteristics referred to above refer to measurements taken when the ionomer(s) contained in the layer are in their dry and protonated form.

Thereafter, the components of the MEAs are assembled by positioning one of the active layers in contact with the solid polymer electrolyte, and then positioning the second and third active layer so that it is between the first active layer and the porous carbon material, forming the membrane/electrode assembly thereby.

The term "catalytically-active particles" as used herein refers to particles of a metal or compound which are catalytic for the electroreduction of oxygen or electrooxidation of hydrogen or methanol under the pressure and temperature conditions in the fuel cell. Examples of such particles which are useful include particles of platinum, ruthenium, gold, palladium, rhodium, iridium, electroconductive and reduced oxides thereof, and alloys of such materials, either in combination with each other or with other transition metals. The particles may be supported on a suitable material, if desired, such as carbon black. Preferably, the catalytically-active particles are platinum particles supported on carbon, which preferably contain from 10 percent to 30 percent by weight of platinum. The size of the catalytically-active particles (on an unsupported basis) is preferably at least 10 Å, more preferably at least 20 Å; but is preferably no greater than 500 Å, more preferably no greater than 200 Å. Larger size particles may also be utilized, or may form during cell operation by the agglomeration of smaller particles. However, the use of such particles may result in decreased cell performance.

The catalytically-active particles are preferably used in an amount sufficient to provide an optimum catalytic effect under the operating conditions of the electrochemical device in which they are employed. Preferably, they are utilized in an amount sufficient to provide a loading level on the cathode side of the membrane of at least 0.05 mg/cm², more preferably at least 0.1 mg/cm², and is most preferably at least 0.15 mg/cm²; but is preferably no greater than 0.45 mg/cm², more preferably no greater than 0.35 mg/cm², and is most preferably no greater than 0.25 mg/cm². The loading level on the anode side of the membrane is preferably at least 0.01 mg/cm², but no greater than 0.15 mg/cm². Relative to the amount of ionomer, however, the particles are preferably present in the ink in an amount, based on the weight of the catalytic particles, including their support, if any, sufficient to provide a weight ratio of particles:ionomer of at least 2:1, but preferably no more than 5:1.

Examples of suitable organic compounds for use in the preparation of the catalyst ink (except for the ink of the seventh aspect of the invention) include polar solvents such as glycerin, C₁₋₆ alcohols, and other compounds such as ethylene carbonate, propylene carbonate, butylene carbonate, ethylene carbamate, propylene carbamate, butylene carbamate, acetone, acetonitrile, difluorobenzene, and sulfolane, but is most preferably propylene carbonate. The organic compound is preferably present in an amount, based on the weight of the composition, of at least 10 percent, more preferably at least 20 percent, and is most preferably at least 30 percent; but is preferably no greater than 90 percent. Such solvents in the ink function primarily as solvents or dispersing aids.

Suitable ionomers for use in the preparation of the catalyst inks described herein include any polymer or oligomer having an ionic conductivity of at least 1 x 10⁻³ S/cm, more preferably at least 10⁻¹ S/cm (under the operating conditions of the fuel cell or electrolytic cell), or which may be reacted with acid or base to generate an oligomer or polymer having ionic conductivity.

Examples of suitable ionomers include fluoropolymers.having pendant ion exchange groups, such as sulfonic acid groups in proton or salt form. Examples of such include sulfonic fluoropolymers having fluoropolymer backbones and 1 to 5 carbon atom pendent ion exchange groups attached thereto and terminating in a sulfonyl group are suitable for use in the present invention. Examples of such sulfonic ion exchange group fluoropolymers are illustrated, for example, in U.S. Patents 4,578,512; 4,554,112; 4,515,989; 4,478,695; 4,470,889; 4,462,877; 4,417,969; 4,358,545; 4,358,412; 4,337,211; 4,337,137; and 4,330,654.

Preferably, the ionomer has a substantially fluorinated polymer backbone and a recurring pendent group having the formula:

―O―(CFR)ₐ―(CFR')_{b}―SO₃M (I)

wherein: a and b are independently 0 or an integer of 1 to 3; a + b is at least 1; R and R' are independently selected from halogen, perfluoroalkyl, and fluorochloroalkyl; and M is independently selected from hydrogen or an alkali metal.

Other ionomers useful in forming both thick and thin composite membrane layers are characterized by a substantially fluorinated polymer backbone and a recurring pendent group having the formula:

O―(CFR)ₐ―(CFR')_{b}―O―(CF₂)_{c}―SO₃M (II)

wherein: a and b are independently 0 or an integer of 1 to 3; c is an integer of 1 to 3; a + b is at least 1; R and R' are independently selected from perfluoroalkyl, halogen, and fluorochloroalkyl; and M is independently selected from hydrogen or an alkali metal.

Ionomers having the above formulas are disclosed in U.S. Patents 4,478,695; 4,417,969; 4,358,545; 4,940,525; 3,282,875; and 4,329,435. The ionomer is preferably present in an amount, based on the weight of the composition, of at least 0.5 percent but preferably no more than 5 percent. The ionomer may be utilized in any ionic form, such as the proton form or salt form of the corresponding oligomer or polymer. Examples of salt forms include quaternary ammonium, sodium, lithium, and potassium.

The ionomers used to prepare the inks preferably have an equivalent weight, based on the number of pendant ionic groups per molecule, of at least 600, more preferably at least 700, and preferably no greater than 1200, more preferably no greater than 950. However, the ionomer must also be substantially insoluble in water at temperatures below 100°C; therefore, the minimum equivalent weight for certain fluoropolymers may be higher. The term "substantially insoluble in water" as used herein means that the pure ionomer in the ionic form is at least 75 percent insoluble in distilled water at any concentration. The difference between the equivalent weight of the ionomers in at least two of the inks used to prepare the MEA is preferably at least 50, more preferably at least 100, and is most preferably at least 300; but is preferably no greater than 800, more preferably no greater than 600, and is most preferably no greater than 400. In the second and third aspects of the invention, the ionomer used to prepare the ink preferably has an equivalent weight of at least 650, more preferably at least 700, and is most preferably at least 770; but is preferably no greater than 950, more preferably no greater than 900, and is most preferably no greater than 840. The equivalent weight of the ionomer may be determined by any suitable technique, such as titration with a base, as illustrated in U.S. Patent 4,940,525.

The fuel cells preferably contain a layer of an electrically conductive porous material (hereafter, "intermediate layer") which is adjacent to the membrane electrode assembly and has at least two portions with different mean pore sizes. The portion of the layer adjacent to the membrane electrode assembly (18) (hereafter, "small pore region") has a mean pore size which is at least ten times smaller than the portion of the layer adjacent to the opposite side of the layer (19) (hereafter, "large pore region "): Compositions suitable for use in the preparation of the intermediate layer include any organic or inorganic composition which can be fabricated into a solid layer having the porosity and pore size characteristics referred to above, and which also has sufficient dimensional, hydrolytic and oxidative stability under the operating conditions of the fuel cell. One method of preparing an intermediate layer having assymetrical pore size characteristics is to prepare such a layer from two or more materials having different mean pore sizes. An example of such a method is to first obtain or prepare a material having a mean pore size suitable for the large pore region (hereafter, "large pore material"), and then infiltrate and/or coat one side of the material with a composition which will reduce the porosity of a portion of the material sufficiently to obtain the smallest desired pore size, and/or form a discrete layer of the composition on the outside of the material having the desired small pore characteristics.

Typically, in a fuel cell, the membrane and the layer of polymer containing a metal catalyst ("active layer") must be hydrated in order to be sufficiently ionically conductive. During operation of the fuel cell, water is formed on the cathode side of the active layer, which condenses within the adjacent flow field. Water may also be present due to the humidification of one or both of the reactant gases. However, if too much water condenses or otherwise accumulates adjacent to the active layer or within the active layer, the efficiency of the fuel cell is reduced, since diffusion of gas through liquid water is slow relative to its diffusion through water vapor.

It is believed, without intending to be bound, that the small pore region of the layer reduces the accumulation of excess liquid water in or next to the active layer because it serves as a semi-permeable layer or membrane which permits the water vapor generated within the active layer or present due to the humidification of the reactant gases to pass between the active layer and the flow field, but reduces or prevents condensation of water on the active layer and reduces or prevents the liquid water present in the flow field or large pore region of the intermediate layer from passing back through the small pore region to the active layer. Preferably, the wettability (determined by the pore size and water-solid contact angle) of the small pore region is such that for a sufficiently large fraction of the pores the displacement pressure required to force liquid water into these pores is larger than the hydraulic pressure in the flow field components under the prevailing condition of pressure and temperature in the fuel cell.

Examples of suitable organic compositions which may be used to prepare or infiltrate the large pore material include thermoplastic or thermosetting polymeric and oligomeric materials, such as polytetrafluoroethylenes, including those which have sulfonic acid groups, (such as Nation™, available from DuPont), poly(alkylene oxide)s, polyolefins, polycarbonates, benzocyclobutanes, perfluorocyclobutanes, polyvinyl alcohols, and polystyrene, epoxy resins, perfluoroalkyl/acrylic copolymers, polyanilines, polypyrroles, as well as mixtures thereof. Preferably, the composition is a polytetrafluoroethylene, perfluoroalkyl/acrylic copolymer, or a perfluorocyclobutane, and is most preferably a perfluorocyclobutane. Examples of suitable inorganic compositions which may be used include clays, silicates, and titanium-based compositions.

The composition used to prepare the small pore region of the intermediate layer preferably contains polymer, carbon particles, and a suitable carrier. The carrier will typically infiltrate the entire large pore material, although the majority of the polymer and carbon particles will collect on or close to the surface of the side of the material to which it is applied (depending on its porosity and the size of the particles contained in the composition), thereby forming the small pore region on the side of the material to which the composition is applied. Accordingly, the regions or portions of the intermediate layer having different mean pore sizes are not necessarily discrete layers, so long as at least the first 1 micron of depth of the small pore region and at least the first 50 microns of depth of the large pore region (as measured from the surface of the layer in a direction perpendicular to the layer) has the necessary pore characteristics.

The intermediate layer may also be prepared by applying the composition used in the preparation of the small pore region to the membrane electrode assembly, and then positioning or laminating a layer of a large pore material adjacent thereto. Alternatively, a film of the composition used in the preparation of the small pore region may be prepared separately using conventional film manufacturing techniques, and then positioned or laminated between the membrane electrode assembly and the large pore material. If the composition is applied to the MEA, it may be applied using any suitable coating technique, such as by painting or silk-screening.

The small pore region of the intermediate layer is preferably at least as hydrophobic as the active layer. The composition used to prepare the small pore region is preferably a liquid-based composition which will solidify after application. If the composition which is applied is solvent-based, enough of the solvent is removed to form a solid layer of material prior to assembling the fuel cell. Such solvent may be removed either at ambient conditions or at elevated temperatures. If appropriate, the composition is heated to increase its stability and uniformity, such as by crosslinking, molecular weight advancement, or agglomerating latex particles.

If the composition used to prepare the small pore region is to be applied directly to the membrane electrode assembly, the majority of the dissolved solids contained therein (such as the polymer) are preferably hydrophilic in character, since the membrane and active layer are normally prepared from a hydrophilic composition, and application of a solution of a primarily hydrophobic dissolved solids would normally be expected to adversely affect the properties of the active layer. However, the composition used to prepare the small pore region is still preferably hydrophobic after being cured.

Hydrophobic fillers, such as carbon fibers and/or powders treated with hydrophobic compositions such as silane- and fluorine-based compositions, may be used in the compositions that are used to prepare the small pore region to give it some hydrophobic character and affect the wettability of its pores, as well as increase the porosity and mean pore size of the solidified composition. In such cases, the weight ratio of carbon fibers or powders to the other components in the composition is preferably at least 1:1, more preferably at least 3:1; and preferably no greater than 10:1, more preferably no greater than 5:1; and is most preferably 3:1. If the small pore region is prepared by applying the composition to a large pore material, such as a graphite paper, the relatively fine pore structure of the paper will help keep the majority of fillers in the composition close to the surface on the side of the paper to which it is applied. Alternatively, the composition may be one which is primarily hydrophilic as applied, but hydrophobic upon curing, such as a polytetrafluoroethylene latex. If the small pore region is prepared by applying a hydrophilic composition to a large pore material, a thin coating of a highly hydrophobic material such as Zonyl™ 7040, a perfluoroalkyl acrylic copolymer available from DuPont, may be applied to the side of the small pore region facing the MEA to further increase its hydrophobicity. Other examples of highly hydrophobic materials include Fluorad™ FC 722 and FC 724, available from 3M.

The MEA is preferably prepared by applying the catalyst ink (a suspension or dispersion of the catalyst) directly to the membrane as described, for example, in U.S. Patent 5,211,984. If the catalyst is to be applied to a porous carbon material, the composition used to prepare the small pore region is preferably applied first, followed by the catalyst ink, so that the infiltrated porous carbon material may be utilized as an intermediate layer, as well as a support layer for the catalyst. However, this method, as well as any methods which require the preparation of a separate film for the intermediate layer are less preferred since such films and catalyst-containing structures must typically be laminated to the membrane portion of the membrane electrode assembly in order to assemble the fuel cell. Such lamination processes, wherein heat and/or excessive pressure is applied to the intermediate layer, may alter or damage its pore structure.

Further, the composition of the intermediate layer may be formulated to optimize the maximum voltage at which the fuel cell will operate at a given current density. It is believed that higher voltages at higher current density require the small pore region to be more hydrophobic than at lower current densities. For example, if a higher voltage at a lower current density is desired, compositions having a higher carbon/polymer ratio (such as 5:1) are preferred for use in the preparation of the small pore region, particularly when applied to a graphite paper having a relatively low porosity. Likewise, if higher voltages at higher current densities are preferred, lower carbon/polymer ratios (such as 3:1) are preferred, particularly when applied to a graphite paper having a relatively high porosity.

The small pore region preferably has a thickness in the range of from 1 micron to 150 microns (as measured in a direction perpendicular to the intermediate layer), and has the desired porosity and pore size characteristics. More preferably, the region has a thickness in the range of from 5 to 25 microns. Preferably, the portion of the region adjacent to the MEA is sufficiently porous to permit the transmission of water vapor through the region. The porosity of this portion of the region is preferably at least 10 percent. The mean pore size of the small pore region is preferably at least 0.1 micron, more preferably at least 1 micron; but is preferably no greater than 10 microns. The mean pore size may be measured by any convenient method, such as by mercury porosimetry. The device used to measure the mean pore size distribution of the layer may be calibrated using silicalalumina calibration standards (available from Micromertrics, Norcross, GA).

The term "mean pore size" as used herein means that half the open volume of the material is contained in pores larger in diameter than the mean pore size, and half is contained in pores equal to or smaller than the mean pore size. The porosity of the small pore region is preferably at least 10 percent. Conductive fillers and non-conductive inert or fugitive fillers may be incorporated into the composition to achieve the desired pore structure. Intrinsically conductive polymers such as doped polyaniline or polypyrrole may also be used to prepare the composition in order to increase its conductivity. The pore structure of the small pore region may also be controlled to some extent by the selection of the polymer or the use of an oligomeric composition.

The large pore region preferably has a thickness of at least 2 mils, more preferably at least 6 mils; but is preferably no greater than 50 mils. The porosity of this region is preferably at least 82 percent, more preferably at least 85 percent, and most preferably at least 87.5 percent. The mean pore size of the large pore region is preferably at least 30 microns. The porosity and pore size values given above represent the characteristics of the small pore region for at least the first micron of its depth from the side of the intermediate layer next to the MEA and at least the first 50 microns of its depth from the opposite side of the intermediate layer, regardless of its method of preparation.

Examples of suitable porous carbon materials which may be utilized as the large pore material include carbon paper, graphite paper, carbon felts, or other carbon-based composites which comprise at least 20 percent by weight of carbon. When desirable, the porous carbon material may be treated with a perfluorosilane or fluorine composition to increase its hydrophobicity, or oxidized, sulfonated, or coated with a hydrophilic material to increase its hydrophilicity. If a porous carbon material is utilized as both the flow field and the large pore material may have interdigitated channels cut into it to lower the pressure drop introduced into the reactant gases. The conductivity of the intermediate layer is preferably at least 0.01 Siemens/cm (S/cm), more preferably at least 0.1 S/cm, and most preferably at least 10 S/cm. The conductivity of the layer may be increased by the addition of conductive fillers, such as carbon fibers or particles, or by the incorporation of conductive salts or polymers.

The term "catalytically-active particles" as used herein refers to particles of a metal or compound which is catalytic for the electroreduction of oxygen or electrooxidation of hydrogen or methanol under the pressure and temperature conditions in the fuel cell. Examples of such particles which are useful include particles of platinum, ruthenium, gold, palladium, rhodium, iridium, electroconductive and reduced oxides thereof, and alloys of such materials, either in combination with each other or with other transition metals. The particles may be supported on a suitable material, if desired, such as carbon black. Preferably, the catalytically-active particles are platinum particles supported on carbon, which preferably contain from 10 percent to 30 percent by weight of platinum. The size of the catalyst particles (on an unsupported basis) is preferably at least 10 Å, more preferably at least 20 Å; but is preferably no greater than 500 Å, more preferably no greater than 200 Å. The particles are preferably used in an amount sufficient to provide an optimum catalytic effect under the operating conditions of the electrochemical device in which they are employed. Relative to the amount of binder, however, the particles are preferably present in the ink in an amount, based on the weight of the catalytic particle, including its support, if any, sufficient to provide a weight ratio of component (a):component (c) of at least 2:1, but preferably no more than 5:1.

Suitable organic compounds include organic compounds having a pKa (the negative logarithm (to the base 10) of the equilibrium constant, K, for the reaction between the compound and water) of at least 18 and a basicity parameter, β, of less than 0.66. Preferably, the pKa is at least 25. Preferably, β is less than 0.48, and is more preferably less than 0.40. The basicity parameter for a number of organic compounds, as well as reference procedures for its determination, are described in Kamlet et al., "Linear Solvation Energy Relationships. 23. A Comprehensive Collection of the Solvochromatic Parameters, n*, α, and β, and Some Methods for Simplifying the Generalized Solvatochromic Equation," J. Org. Chem., Vol. 48, pp. 2877-2887 (1983).

Preferably, the compound volatilizes at temperatures in the range of from 100°C to 250°C without significant degradation which can impair the performance of the active layer. A relatively low volatization temperature is also preferred, since organic compounds (component (b)) that are not removed from the layer can add to the electrical resistance of the layer, causing poorer MEA performance. This characteristic is particularly important when the binder is utilized in its proton form, since the binder will act as a catalyst to further promote the degradation of any residual organic compound. The use of a proton form of the binder has advantages, however, since quaternary ammonium cations present in an ink composition are difficult to remove and may contribute to a long "break in" period when a fuel cell or fuel cell stack is initially started. Preferably, the boiling point of the solvent is greater than 100°C so that, upon curing of the ink, the water or low boiling solvents which may be present in the ink (typically introduced to the ink by way of a commercially available binder containing such components) are removed first.

Examples of suitable organic compounds for use as component (b) include ethylene carbonate, propylene carbonate, butylene carbonate, ethylene carbamate, propylene carbamate, and butylene carbamate, acetone, acetonitrite, difluorobenzene, and sulfolane, but is most preferably propylene carbonate. The organic compound is preferably present in an amount, based on the weight of the composition, of at least 10 percent, more preferably at least 20 percent, and is most preferably at least 30 percent; but is preferably no greater than 90 percent.

Suitable polymeric binders for use in the preparation of the composition of the invention include any polymer or oligomer having ionic conductivity of at least 1x10⁻³ S/cm, more preferably at least 10⁻¹ S/cm (under the operating conditions of the fuel cell) or electrolytic cell, or which may be reacted with acid or base to generate an oligomer or polymer having ionic conductivity. If the binder has pendant ionic groups, it preferably has an equivalent weight of at least 600, more preferably at least 700, and preferably no greater than 1200, more preferably no greater than 950. The equivalent weight of the binder is based on the number of pendant ionic groups per molecule, as may be determined by any suitable technique, such as titration with a base, as illustrated in U.S. Patent 4,940,525. Examples of suitable binders include perfluorinated polymers and polytetrafluoroethylene polymers, and polytetrafluoroethylene polymers having pendant sulfonic acid groups, (such as Nafion™, available from DuPont). The binder is preferably present in an amount, based on the weight of the composition, of at least 0.5 percent but preferably no more than 5 percent. One advantage of the present invention is that the ionomer may be utilized in any ionic form, such as the proton form or salt form of the oligomer or polymer. Examples of salt forms include quaternary ammonium, sodium, lithium, and potassium.

The MEA may be prepared by any suitable technique. Preferably, the MEA is prepared by applying one or more layers of the catalyst ink (the composition of the invention) directly to the solid polymer electrolyte as described, for example, in U.S. Patent 5,211,984. The term "solid polymer electrolyte" as used herein refers to a membrane comprised of a solid polymer which has a conductivity of at least 1x10⁻³ S/cm under the operating conditions of the fuel cell or electrolytic cell, or which may be reacted with acid or base to generate a membrane having such conductivity. Preferably, the solid polymer electrolyte comprises a film of a sulfonated fluoropolymer. Another method comprises applying one or more layers of the catalyst ink to a release material, such as a polytetrafluoroethylene-coated substrate, curing the ink, and then laminating the cured material to the membrane. A third method comprises applying one or more layers of the catalyst ink to one side of a sheet of porous carbon material, such as a carbon or graphite paper, and then placing the side of the material to which the ink was applied adjacent to the membrane. If the ink is cured before being placed next to the membrane, it should then preferably be laminated to the membrane to ensure good contact between the two.

The ink may be cured using any suitable method for removing at least 95 percent of component (b), as well as any other volatile organic solvents contained in the ink, such as by heating at an elevated temperature optionally under reduced pressure. Preferably, the ink is heated to a temperature at which the component (b) is volatile, but below its boiling point. If more than one ink is used to prepare the active layer of the MEA, the inks preferably contain a polytetrafluoroethylene polymer having pendant sulfonic acid groups as the binder, and the layer of ink closest to the membrane has an equivalent weight which differs from the equivalent weight of the binder in the ink layer adjacent thereto by at least 50. Further, the layer having the lowest equivalent weight binder is preferably positioned adjacent to the solid polymer electrolyte.

Preferably, the ink is heated under conditions sufficient to remove at least 99 percent, more preferably at least 99.9 percent of component (b). The ink is applied in an amount sufficient to provide a layer of the composition which, when dry and protonated, has a thickness of at least 1 µm, more preferably at least 5 µm, and most preferably at least 10 µm; but is preferably no greater than 30 µm. The porosity of the layer is preferably at least 30 percent, more preferably at least 50 percent; but is preferably no greater than 90 percent, more preferably no greater than 60 percent. The mean pore side of the layer is preferably at least 0.01 µm, more preferably at least 0.03 µm; but is preferably no greater than 10 µm, more preferably no greater than 0.5 µm, and is most preferably 0.1 µm.

The following examples are given to illustrate the invention and should not be interpreted as limiting it in any way. Unless stated otherwise, all parts and percentages are given by weight.

### Example 1

Membrane and electrode structures were prepared as follows: An ion exchange membrane prepared from perfluorosulfonic acid ionomer having an equivalent weight of 800, a thickness of 2.4 mil (60 µm) dried and 5 mil (127 µm) fully hydrated (available from The Dow Chemical Company as XUS 13204.20) was obtained and cut into sheets 11 cm by 11 cm and placed into a NaOH bath to convert it to the Na + form. The electrode ink was prepared by mixing 1.08 g of a 5.79 weight percent solution of the above ionomer (in a 50:50 volume percent ethanol/water solution), 0.1875 g of 20 weight percent platinum on carbon (available from E-TEK (Natick, MA)) and 0.114 g of a 1 M solution of tetrabutylammonium hydroxide (TBAOH, a plasticizing agent) in methanol, and 0.6 g of propylene carbonate (dispersing aid). The mixture was agitated with a stir bar overnight or until the mixture was uniformly dispersed. An additional 1.2 g of propylene carbonate was then added to the mixture.

The catalyst ink was painted onto clean, 9 cm² polytetrafluoroethylene-coated fiberglass blanks (CHR Industries, New Haven, CT) which had been dried in a oven at 110°C and pre-weighed. The blanks were painted twice with the catalyst ink, which was completely dried before the application of the second layer. Pt loadings were 0.14 mg/cm² on the anode and 0.25 mg/cm² on the cathode. The MEA was formed by aligning a coated blank on each side of the ionomer membrane which had been dried on a vacuum table. The blanks and membrane were placed between two pieces of stainless steel to hold them while they were placed into the press. The assembly was placed into a press at 195°C and pressed at a pressure of 100 pounds per cm² of blank for 5 minutes. The press package was allowed to cool to room temperature before opening. The blank was peeled away from the layer containing catalytically-active particles, leaving the film adhered to the surface of the membrane. The cathode flow field was carbon paper having a porosity of 90 percent and a thickness of 24 mils (available as Spectracarb™ paper from Spectracorp (Lawrence, MA)). The wettability of the paper was increased by oxidation in a medium comprising 0.006M silver sulfate, 0.2M sodium persulfate, and 0.5M sulfuric acid, at a temperature of 60°C for 1 hour. A 3 by 3-inch sample of the paper oxidized in this manner imbibed 2.7 g of water per gram of carbon, when held vertically in a pan containing water of 3/16 inch depth for 10 seconds. The anode flow field was carbon paper having a porosity of 79 percent and a thickness of 14 mils.

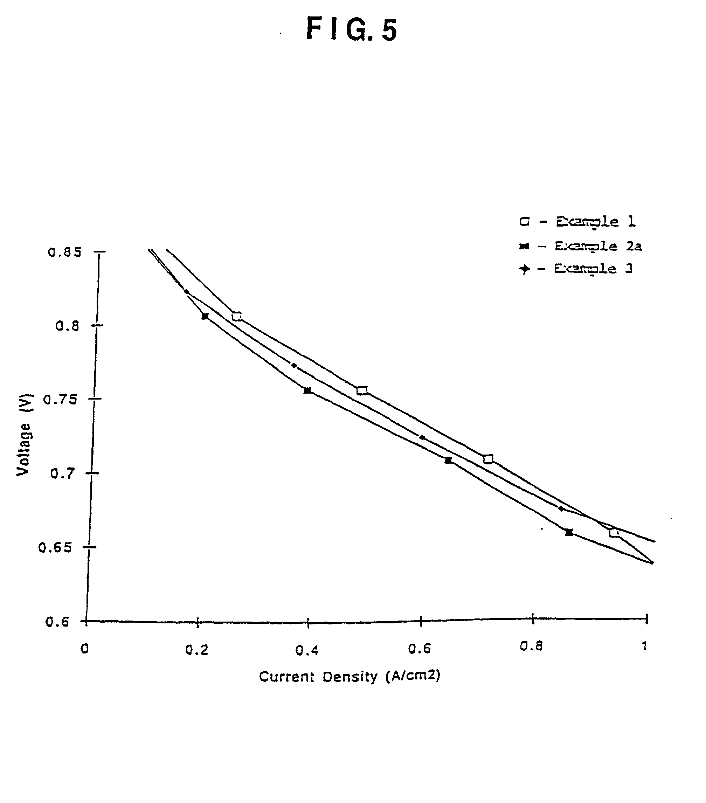

The membrane electrode assembly and porous flow fields were tested in a test fuel cell prepared by Fuel Cell Technologies, Inc. (Santa Fe, NM). The MEA and flow fields were placed between two solid graphite blocks, each with a single gas delivery channel and a single exit channel. The cell was placed onto a single cell test stand made by Fuel Cell Technologies, Inc. The performance of the flow field was illustrated in Figures 4 and 5, under the flow conditions set forth in Table I. Air was used as the oxidant gas unless as otherwise noted in the Table I.

**Table I**

| Example # | Oxidant Humidifier Temperature (°C) | Inlet Pressure (psig) | Outlet Pressure (psig) | Pressure Drop (psi) | Oxidant Stoichiometry at 2 A cm⁻² |
|---|---|---|---|---|---|
| 1 | 85 | 32.7 | 31.0 | 1.7 | 1.0 |
| 2a | 90 | 32.9 | 31.0 | 1.9 | 1.0 |
| 2b | 90 | 31.9 | 30.0 | 1.9 | 1.5 |
| 2c | 90 | 32.9 | 30.0 | 2.9 | 2.0 |
| 2d | 90 | 33.0 | 31.5 | 1.5 | 2.4* |
| 3 | 85 | 32.3 | 31.0 | 1.3 | 1.0 |

| | | | | | |
|---|---|---|---|---|---|
| *oxygen as oxidant | | | | | |

### Example 2

An MEA/electrode structure was prepared using the procedure described in Example 1, except that the electrode ink was prepared by mixing 1 g of a 5 percent solution of Nation™ (an 1100 equivalent-weight polytetrafluoroethylene having sulfonic acid groups, available from DuPont), 0.130 g of carbon-supported platinum containing 20 percent by weight of platinum, and 0.076 g of a 1 M solution of tetrabutylammonium hydroxide (TBAOH) in methanol, and 1.2 g of propylene carbonate (a dispersing aid). A fuel cell was assembled and tested in accordance with the procedure described in Example 1. The performance of the flow field is illustrated in Figures 3, 4, and 5, under the flow conditions set forth in Table I. Careful examination of the curve for Example 2a suggests that the mass transport limitation apparent in the curve was not caused by the presence of liquid in the flow field but rather by the consumption of all of the oxygen in the air feed to the fuel cell. The limiting current was just under 2 A/cm² when the air stoichiometry was 1X at 2 A/cm². The curve shows that the fuel cell may be operated at 2 A/cm² with air stoichiometry only slightly more than 1. When this fuel cell was incorporated into a multi-cell stack as part of a power generation system, the ability to operate on such low stoichiometry would help minimize the cost of a gas pressurization subsystem. Further increases in the flow rates (Example 2b, 2c) flattened out the curve, suggesting that the performance was almost entirely limited by the cell resistance and further confirmed the absence of mass transfer limitations. A performance curve obtained using pure oxygen as the gas feed is shown in Figure 3 as Example 2d.

### Example 3

An MEA/electrode structure was prepared using the procedure described in Example 1, except that two electrode inks as described in Examples 1 and 2 were prepared separately. The ink of Example 2 was painted onto the fiberglass blank to be used with the cathode side of the membrane, and allowed to dry completely, followed by an application of the ink described in Example 1. The ink described in Example 1 was applied to the fiberglass blank to be used with the anode side of the membrane. Platinum loadings were 0.14 mg/cm² on the anode side of the membrane and 0.25 mg/cm² on the cathode side of the membrane. A fuel cell was assembled and tested as described in Example 1. The performance of the fuel cell was illustrated in Figures 4 and 5, under the flow conditions set forth in Table I.

## Claims

1. An electrochemical fuel cell having a membrane electrode assembly and a flow field adjacent thereto wherein the flow field is formed of an electrically conductive porous carbon material having a porosity of at least 50 percent, and a mean pore size of at least 35 micrometres wherein the porous material has a thickness of at least 20 mils (0.5mm) and is such that a 3 inch by 3 inch (7.5cm x 7.5cm) portion of the porous material can imbibe at least 0.5 gram of water per gram of material in ten seconds when held vertically in 3/16 inch (0.5cm) of water.

2. The fuel cell of Claim 1 wherein the porous material is such that a 3 inch by 3 inch (7.5cm x 7.5cm) portion can imbibe at least 1 gram of water per gram of material in ten seconds when held vertically in 3/16 inch (0.5cm) of water.

3. The fuel cell of Claim 1 wherein the flow field has a porosity of at least 75 percent.

4. The fuel cell of Claim 1 wherein the flow field has a porosity of at least 80 percent

5. The fuel cell of Claim 1 wherein the flow field has a mean pore size of at least 45 micrometres.

6. The fuel cell of Claim 1 wherein the flow field has a mean pore size of at least 50 micrometers.

7. The fuel cell of Claim 1 wherein the flow field has a mean pore size of no greater than 250 micrometres.

8. The fuel cell of Claim 1 wherein the membrane electrode assembly comprises a solid polymer membrane having at least two layers of catalytically-active particles ink on at least one side thereof, wherein at least two layers of the catalytically-active particles ink comprise polytetrafluroethylene polymers having pendant sulfonic acid groups, equivalent weights which differ by more than 50, and wherein the layer having the highest equivalent weight is positioned adjacent to the flow field.

9. The fuel cell of Claim 8 wherein the porous material has a porosity of at least 80 percent and a mean pore size of at least 50 micrometres.

10. A stack assembly comprising at least 3 of the fuel cells as claimed in any one of the preceding claims arranged in series, wherein each fuel cell in the series comprises, in sequence, flow field, membrane electrode assembly, flow field, and a separator plate.

## Patentansprüche

1. Elektrochemische Brennstoffzelle, die eine Membran-Elektrode-Anordnung und ein hieran angrenzendes Strömungsfeld hat, bei welcher das Strömungsfeld aus einem elektrisch leitfähigen porösen Kohlenstoffmaterial gebildet ist, das eine Porosität von wenigstens 50 % und eine mittlere Porengröße von wenigstens 35 Mikrometern hat, bei welcher das poröse Material eine Dicke von wenigstens 20 mils (0,5 mm) hat und derart ist, daß ein Abschnitt von 3 Zoll x 3 Zoll (7,5 x 7,5 cm) des porösen Materials wenigstens 0,5 Gramm Wasser pro Gramm von Material in 10 Sekunden einsaugen kann, wenn er senkrecht in 3/16 Zoll (0,5 cm) Wasser gehalten wird.

2. Brennstoffzelle nach Anspruch 1, bei welcher das poröse Material derart ist, daß ein Abschnitt von 3 Zoll x 3 Zoll (7,5 x 7,5 cm) wenigstens 1 Gramm Wasser pro Gramm von Material in 10 Sekunden einsaugen kann, wenn er senkrecht in 3/16 Zoll (0,5 cm) Wasser gehalten wird.

3. Brennstoffzelle nach Anspruch 1, bei welcher das Strömungsfeld eine Porosität von wenigstens 75 % hat.

4. Brennstoffzelle nach Anspruch 1, bei welcher das Strömungsfeld eine Porosität von wenigstens 80 % hat.

5. Brennstoffzelle nach Anspruch 1, bei welcher das Strömungsfeld eine mittlere Porengröße von wenigstens 45 Mikrometern hat.

6. Brennstoffzelle nach Anspruch 1, bei welcher das Strömungsfeld eine mittlere Porengröße von wenigstens 50 Mikrometern hat.

7. Brennstoff zelle nach Anspruch 1, bei welcher das Strömungsfeld eine mittlere Porengröße von nicht größer als 250 Mikrometern hat.

8. Brennstoffzelle nach Anspruch 1, bei welcher die Membran-Elektrode-Anordnung eine feste Polymermembran umfaßt, die wenigstens zwei Schichten von katalytisch aktiver Teilchentinte auf wenigstens einer Seite hiervon hat, bei welcher wenigstens zwei Schichten der katalytisch aktiven Teilchentinte Polytetrafluorethylenpolymere umfassen, die anhängende Sulfonsäuregruppen, Äquivalentgewichte, die sich um mehr als 50 unterscheiden, haben, und bei welcher die Schicht mit dem höchsten Äquivalentgewicht angrenzend an das Strömungsfeld positioniert ist.

9. Brennstoffzelle nach Anspruch 8, bei welcher das poröse Material eine Porosität von wenigstens 80 % und eine mittlere Porengröße von wenigstens 50 Mikrometern hat.

10. Stapelanordnung, umfassend wenigstens 3 der in irgendeinem der vorangehenden Ansprüche beanspruchten Brennstoffzellen, angeordnet in Reihe, bei welcher jede Brennstoffzelle in der Reihe aufeinanderfolgend Strömungsfeld, Membran-Elektrode-Anordnung, Strömungsfeld und eine Separatorplatte umfaßt.

## Revendications

1. Pile électrochimique à combustible, comportant un ensemble membrane-électrodes et un champ-d'écoulement qui y est adjacent, lequel champ d'écoulement est constitué d'un matériau carboné, poreux et conducteur électrique, dont la porosité vaut au moins 50 % et dont les pores ont une taille moyenne d'au moins 35 micromètres, lequel matériau poreux est épais d'au moins 0,5 mm (20 millièmes de pouce) et tel qu'un morceau de 7,5 cm × 7,5 cm (3 pouces sur 3 pouces) de ce matériau poreux peut, lorsqu'on le tient verticalement dans 0,5 cm (3/16 de pouce) d'eau, s'imbiber en 10 secondes d'au moins 0,5 gramme d'eau par gramme de matériau.

2. Pile à combustible conforme à la revendication 1, dans laquelle le matériau poreux est tel qu'un morceau de 7,5 cm × 7,5 cm (3 pouces sur 3 pouces) peut, lorsqu'on le tient verticalement dans 0,5 cm (3/16 de pouce) d'eau, s'imbiber en 10 secondes d'au moins 1 gramme d'eau par gramme de matériau.

3. Pile à combustible conforme à la revendication 1, dans laquelle le champ d'écoulement présente une porosité d'au moins 75 %.

4. Pile à combustible conforme à la revendication 1, dans laquelle le champ d'écoulement présente une porosité d'au moins 80 %.

5. Pile à combustible conforme à la revendication 1, dans laquelle la taille moyenne des pores du champ d'écoulement vaut au moins 45 micromètres.

6. Pile à combustible conforme à la revendication 1, dans laquelle la taille moyenne des pores du champ d'écoulement vaut au moins 50 micromètres.

7. Pile à combustible conforme à la revendication 1, dans laquelle la taille moyenne des pores du champ d'écoulement ne vaut pas plus de 250 micromètres.

8. Pile à combustible conforme à la revendication 1, dans laquelle l'assemblage membrane-électrodes comprend une membrane solide en polymère portant, au moins sur l'un de ses côtés, au moins deux couches d'encre à particules catalytiquement actives, au moins deux de ces couches d'encre à particules catalytiquement actives comprenant des polymères de type polytétrafluoroéthylène qui comportent des groupes pendants de type acide sulfonique et dont les poids d'équivalent diffèrent de plus de 50, la couche constituée du polymère au poids d'équivalent le plus élevé étant adjacente au champ d'écoulement.

9. Pile à combustible conforme à la revendication 8, dans laquelle le champ d'écoulement présente une porosité d'au moins 80 %, et la taille moyenne des pores du champ d'écoulement vaut au moins 50 mi-cromètres.

10. Assemblage comprenant au moins trois piles à combustibles, conformes à l'une des revendications précédentes et montées en série, chacune des piles à combustible de la série comportant, dans l'ordre, un champ d'écoulement, un assemblage membrane-électrodes, un champ d'écoulement, et une plaque séparatrice.
